# FASCICULE DE BREVET EUROPEEN

(11) **EP 4 016 235 B1**
(45) Date de publication et mention de la délivrance du brevet: **16.10.2024**
(21) Numéro de dépôt: 21214999.1
(22) Date de dépôt: 16.12.2021
(51) Int. Cl.: G05D 1/243, G05D 1/244, G05D 1/695, B64D 47/08, G05D 105/22, G05D 107/13, G05D 109/22, G05D 111/10

(54) **SYSTÈME D'ACQUISITION DE L'IMAGE D'UN AÉRONEF MENEUR DEPUIS UN AÉRONEF SUIVEUR EN LUMINOSITÉ RÉDUITE**
SYSTEM ZUR ERFASSUNG DES BILDES BEI REDUZIERTER HELLIGKEIT EINES LEITFLUGZEUGS VON EINEM NACHFOLGENDEN FLUGZEUG AUS
SYSTEM FOR ACQUIRING THE IMAGE OF A LEADING AIRCRAFT FROM A FOLLOWING AIRCRAFT WITH REDUCED BRIGHTNESS

(30) Priorité: 17.12.2020 FR 2013428
(43) Date de publication de la demande: 22.06.2022
(73) Titulaire: AIRBUS OPERATIONS (S.A.S.), 31060 Toulouse (FR)
(72) Inventeur: LEFORT, Maxime, 31060 TOULOUSE (FR); MONTET, Florent, 31060 TOULOUSE (FR); VIALATTE, Jean-Luc, 31060 TOULOUSE (FR)
(74) Mandataire: Jardel, Marc Henry Philippe

(56) Documents cités:
- EP-A1- 3 401 702
- EP-A1- 3 422 134
- JP-A- H11 139 396
- US-A1- 2017 267 371

## Description

La présente invention se rapporte à un système d'acquisition de l'image d'un aéronef meneur depuis un aéronef suiveur dans un vol en formation dans lequel l'aéronef suiveur vole dans le sillage de l'aéronef meneur dans des conditions de luminosité réduite et notamment de nuit.

Dans le domaine de l'aéronautique, on entend par « vol en formation », le vol d'une formation d'au moins deux aéronefs, l'un suivi dit meneur, et l'autre dit suiveur volant derrière l'aéronef meneur. De tels vols, en particulier pour les avions commerciaux, ont pour avantage de réduire la consommation de carburant de l'aéronef suiveur du fait de réduire sa trainée. Cependant la zone dans laquelle doit se trouver l'aéronef suiveur par rapport à l'aéronef meneur est restreinte et il est donc nécessaire que le positionnement de l'aéronef suiveur soit précis et rapide. Le document JP H11 139396 décrit un dispositif permettant de contrôler un vol en formation et divulgue une forme de réalisation dans laquelle un laser transmis depuis l'avion suiveur est réfléchi par un réflecteur positionné sous la lumière de 15 navigation de l'avion suivi afin de mesurer la distance entre les deux avions, l'angle formé entre les avions étant déterminé par le déplacement d'une tourelle recherchant et prenant la direction de la lumière de navigation de l'avion suivi. Le document EP3422134 divulgue un procédé de pilotage de plusieurs aéronefs en vol en formation à partir d'une grille de navigation projetée par l'avion suivi 20 permettant de déterminer une relation spatiale entre les avions.

On connaît de la demande de brevet FR2005541 déposée le 26 mai 2020 par AIRBUS OPERATIONS SAS et AIRBUS SAS un tel procédé dans un contexte de vol de jour. Il nécessite l'acquisition de l'image de l'aéronef meneur par une ou plusieurs caméras vidéo ce qui est difficile voire impossible de nuit.

La présente invention a pour but de proposer un système permettant d'acquérir une image suffisante pour l'utilisation d'un procédé de positionnement tel que celui décrit dans la demande de brevet susmentionnée dans des conditions de luminosité réduite voire de nuit.

A cet effet, la présente invention concerne des aéronefs en vol en formation comprenant un aéronef meneur et un aéronef suiveur volant derrière l'aéronef meneur, munis d'un système d'acquisition d'une image de l'aéronef meneur par l'aéronef suiveur comprenant au moins une caméra installée sur ou dans l'aéronef suiveur, un dispositif d'éclairage prévu sur l'aéronef suiveur et orienté au moins partiellement vers l'aéronef meneur et un dispositif rétro-réfléchissant de type catadioptre disposé sur l'aéronef meneur, caractérisé en ce que le dispositif rétro-réfléchissant comprend au moins un ou plusieurs catadioptres sous une forme oblongue ou juxtaposés de manière à former un agencement oblong qui de loin apparaît sous la forme d'une ligne, le dispositif rétro-réfléchissant se présentant sous la forme de bandes disposées sur la surface extérieure de l'aéronef meneur, les bandes (14) étant disposées sur des lignes selon l'axe Y et Z du repère cartésien de l'avion meneur (2), à savoir selon l'axe Y au niveau de l'aile et/ou de l'empennage horizontal et selon l'axe Z au niveau de l'empennage vertical.

De cette manière, le dispositif rétro-réfléchissant éclairé permet à la caméra d'acquérir une image des zones marquées par ledit dispositif malgré la luminosité réduite. La lumière réfléchie par le dispositif rétro-réfléchissant de l'aéronef meneur vers l'aéronef suiveur est suffisante pour permettre la délimitation des zones marquées.

L'invention prévoit au moins l'une des caractéristiques optionnelles suivantes, prises isolément ou en combinaison.

Des bandes sont apposées sur des arêtes du fuselage de l'avion meneur.

Au moins l'une des bandes est positionnée sur une partie ou la totalité du bord de fuite de la voilure.

Au moins l'une des bandes est positionnée sur une partie ou la totalité du bord de fuite de l'empennage horizontal.

Au moins l'une des bandes est positionnée sur une partie ou la totalité du bord de fuite de l'empennage vertical.

Au moins l'une des bandes est positionnée au niveau d'une gouverne.

Le dispositif rétro-réfléchissant comprend un catadioptre au niveau de l'extrémité de la queue de l'aéronef meneur.

Le dispositif d'éclairage comprend les phares d'atterrissage de l'aéronef suiveur.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue en perspective simplifiée d'un exemple d'un vol en formation comprenant un avion meneur et un avion suiveur tous deux munis du système d'acquisition selon la présente invention ;
[Fig. 2] est une vue schématique de dessus d'un vol en formation tel que celui de la figure 1 comprenant deux avions munis chacun d'un repère et mettant en évidence des données de positionnement de l'avion meneur par rapport à l'avion suiveur ;
[Fig. 3] est une vue d'un avion en perspective muni d'un repère et mettant en évidence des données de positionnement ;
[Fig. 4] est une vue partielle en perspective de l'intérieur d'un avion suiveur, en particulier d'une installation d'une caméra sur le tableau de bord du cockpit dudit avion suiveur ;
[Fig. 5] est une vue partielle en perspective d'un avion dont les phares d'atterrissage sont allumés ;
[Fig. 6] est une vue en perspective d'un avion meneur en vol de nuit, vu depuis un avion suiveur tous deux munis du système d'acquisition selon la présente invention.

La présente invention est illustrée dans ce qui suit avec l'exemple d'un avion commercial. Cependant, elle ne se limite pas à cette application et peut concerner tout type d'aéronef en vol en formation comme par exemple un avion de chasse, une aile volante ou encore un aéronef à fuselage intégré.

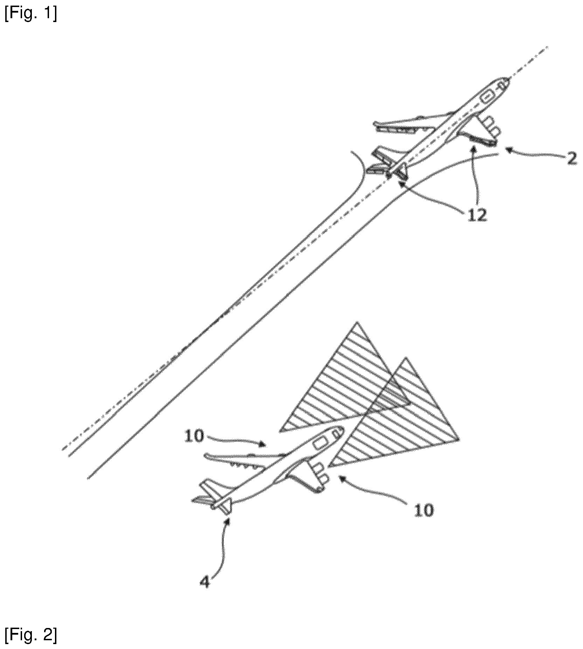

Selon une application possible de la présente invention et évoquée dans la présente demande en exemple, le système selon la présente invention permettant l'acquisition de l'image d'un avion meneur dans un vol en formation peut s'intégrer dans un système et un procédé plus global de détermination du positionnement d'un avion suiveur par rapport à un avion meneur volant devant l'avion suiveur, qui ne sera pas décrit plus en détail car il ne fait pas l'objet de la présente demande comme vu plus haut. L'avion 2 meneur et l'avion 4 suiveur sont destinés à réaliser un vol en formation comme représenté sur la figure 1.

On entend par vol en formation, une formation composée d'au moins deux avions en vol parmi lesquels au moins l'un d'eux est un avion 2 meneur et au moins l'un d'eux est un avion 4 suiveur : l'avion 4 suiveur vole derrière l'avion 2 meneur et doit tenir sa position par rapport à la position de l'avion meneur. Il est donc nécessaire de déterminer avec précision et rapidité la position de l'avion suiveur par rapport à celle de l'avion meneur pour s'y coordonner.

Pour permettre de déterminer son positionnement par rapport à l'avion 2 meneur, l'avion 4 suiveur doit déterminer en temps réel les données de positionnement de l'avion 2 meneur par rapport à ces propres données. On entend par positionnement à la fois la position dans un référentiel cartésien d'un avion par rapport à l'autre et à la fois l'orientation définie par trois angles selon trois rotations d'un avion par rapport à l'autre.

Comme illustré sur la figure 2, chaque avion 2, 4 est muni d'un repère R2, R1 cartésien en trois dimensions dont l'origine est un point particulier, connu, dudit avion 2, 4. Lesdites trois dimensions sont définies par trois axes orthogonaux notés X, Y et Z. De plus, l'origine du repère d'un avion 2, 4 peut être son centre de gravité moyen, ou un point de la partie avant du fuselage de l'avion (i.e. du nez de l'avion).

Aussi, tel qu'illustré sur la figure 2, l'avion suiveur 4 est muni d'un repère R1 cartésien en trois dimensions, défini par les axes (X1, Y1, Z1), et l'avion meneur 2 est muni d'un repère R2 cartésien en trois dimensions, défini par les axes (X2, Y2, Z2). La position d'un point dans un repère, par exemple dans le repère R1, est donnée par ses coordonnées selon les axes (X1, Y1, Z1). Plus particulièrement, dans le cas présent, on s'intéresse à la position de l'aéronef suiveur 4 par rapport à l'aéronef meneur 2. Une telle position est donnée par les coordonnées de l'origine du repère R1 de l'aéronef suiveur 4 dans le repère R2 de l'aéronef meneur 2

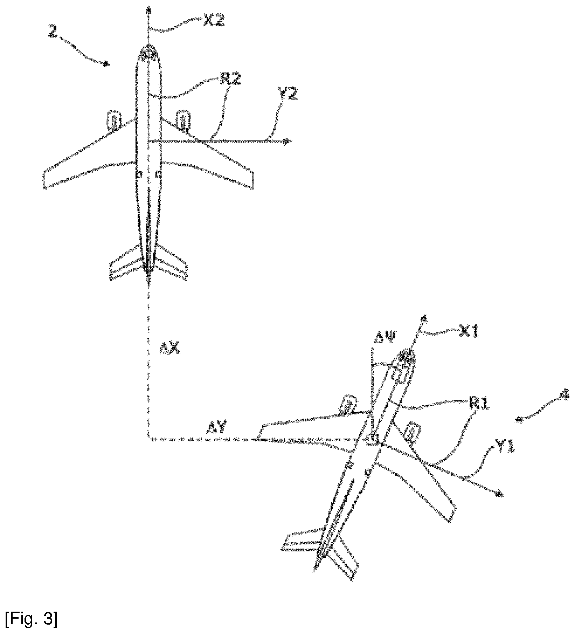

Dans ce même mode de réalisation et tel que représenté sur la figure 3, l'orientation de l'aéronef suiveur 4 dans le repère de l'aéronef meneur 2 est définie par trois angles selon les trois mouvements de rotation usuels de l'aéronef : l'angle de roulis, noté Φ, l'angle de tangage, noté Θ, et l'angle de lacet, noté Ψ. L'orientation de l'aéronef suiveur 4 par rapport à l'aéronef meneur 2 peut aussi être définie par les écarts angulaires (notés ΔΦ, ΔΘ, ΔΨ) représentant respectivement l'écart angulaire entre l'angle respectivement de roulis, tangage, lacet de l'aéronef suiveur 4 et l'angle respectivement de roulis, tangage, lacet de l'aéronef meneur 2 dans le référentiel terrestre.

On entend par positionnement de l'aéronef suiveur 4 par rapport à l'aéronef meneur 2, la position et l'orientation dudit aéronef suiveur 4 par rapport audit aéronef meneur 2. Pour le déterminer, il est nécessaire d'acquérir l'image de l'avion meneur en temps réel permettant de déduire position et orientation par rapport à l'avion suiveur.

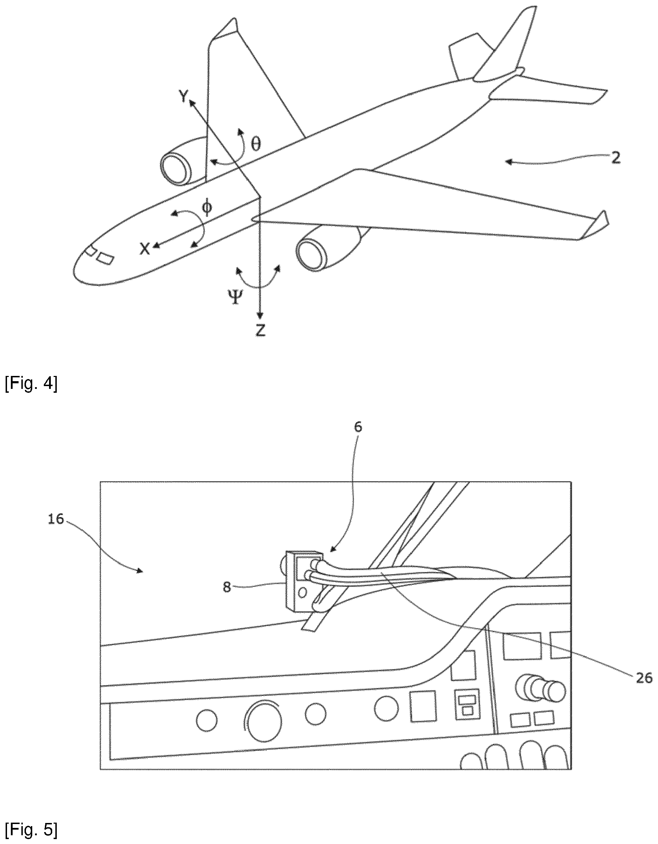

Comme illustré sur les figures 4 à 6, le système 6 d'acquisition est monté sur l'avion meneur 2 et l'avion suiveur 4 et est configuré pour acquérir une image de l'avion meneur 2 à un temps donné permettant de déterminer en temps réel les données de positionnement mentionnées plus haut. L'objectif d'une telle détermination de positionnement est de fournir des données de positionnement à un dispositif utilisateur déterminant des consignes de vol à partir des données de positionnement, notamment pour un pilotage automatique (et autonome) de l'aéronef suiveur 4 lors du vol en formation.

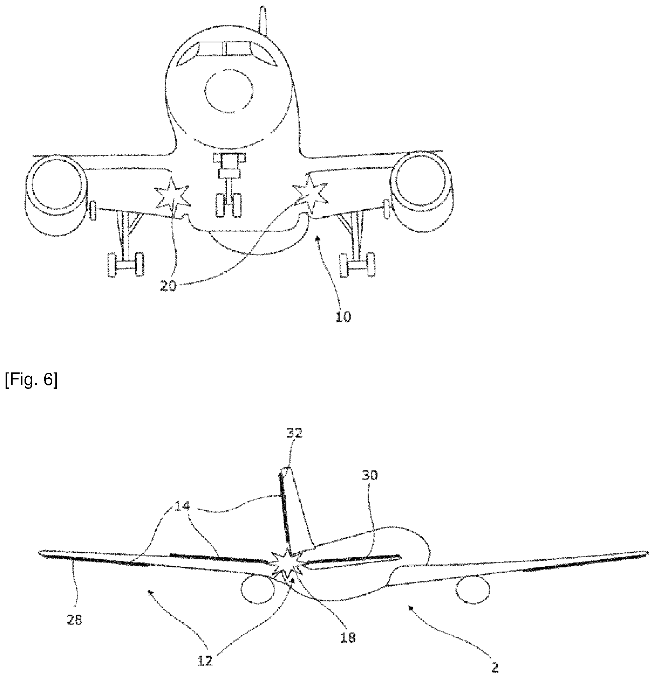

Une telle acquisition est rendue difficile lorsque la luminosité baisse voire impossible de nuit. Le système 6 d'acquisition selon la présente invention comprend des moyens permettant de déterminer le positionnement et l'orientation de l'aéronef meneur lorsque les conditions de luminosité ne permettent plus de le faire avec les systèmes connus. Le système 6 d'acquisition selon la présente invention comprend au moins une caméra 8 (figure 4) installée sur ou dans l'avion suiveur 4, un dispositif 10 d'éclairage (figure 5) prévu sur l'avion suiveur 4 et orienté au moins partiellement vers l'avion meneur 2, un dispositif 12 rétro réfléchissant (figure 6) de type catadioptre disposé sur l'avion meneur 2.

Comme illustré sur la figure 4, le système 6 comprend au moins une caméra 8 permettant d'obtenir des images en temps réel de l'avion meneur 2. Le terme caméra est pris dans un sens générique à savoir un appareil susceptible de prendre des images de manière successive. La résolution de la caméra doit être suffisamment importante pour assurer une bonne détection et obtenir la précision de mesure requise par le procédé de détermination de positionnement. Selon une forme de réalisation particulière, la résolution minimale est de 200 pixels répartis sur l'envergure de l'avion meneur 2 ce qui conduit à une caméra possédant une résolution d'au moins 4000*3000 pixels. Le système 6 peut comprendre plusieurs caméras 8 vidéo permettant d'obtenir différentes images de l'avion meneur 2 toutes traitées pour obtenir la meilleure extraction possible des données angulaires et de positionnement dudit avion. Dans un mode de réalisation, la caméra 8 est une caméra vidéo fixée dans le cockpit 16 de l'avion suiveur 4. La ou les caméras 8 sont pointées vers l'avant : elles doivent permettre de cadrer l'ensemble du dispositif 12 rétro-réfléchissant. Dans l'exemple illustré, elles doivent permettre une visualisation de la globalité du secteur arrière de l'avion meneur 2. Dans le cadre de la présente invention, la caméra 8 vidéo peut être agencée à d'autres endroits de l'aéronef suiveur 4 où elle est en mesure de prendre les images souhaitées. La caméra vidéo 8 est configurée de manière à pouvoir prendre des images de l'avion 2 meneur sous forme de flux vidéo. Par exemple, la caméra vidéo 8 peut être fixée sur la pointe avant du fuselage de l'avion suiveur 4. La mesure de nuit implique l'utilisation d'une caméra très sensible aux faibles lumières ; la caméra doit être capable de détecter de faibles valeurs de luminosité. Elle doit également disposer d'un bon contraste pour rendre la détection des images formées par le dispositif rétro-réfléchissant aisée et précise.

Pour visualiser un avion de nuit, il est possible de l'éclairer depuis l'avion suiveur et d'utiliser des surfaces de l'avion meneur pour réfléchir naturellement la lumière mais cela ne permet pas une acquisition correcte de l'avion meneur par l'avion suiveur. En effet, la puissance lumineuse nécessaire est bien trop insuffisante.

Pour surmonter la difficulté de visualiser l'avion meneur de nuit, le système d'acquisition selon la présente invention utilise un dispositif 12 rétro-réfléchissant de type catadioptre, encore appelé rétro-réflecteur coins de cube illustré sur la figure 6. Un tel dispositif se caractérise par le fait que l'ensemble du faisceau lumineux reçu, en l'occurrence ici provenant du dispositif 10 d'éclairage de l'avion suiveur 4, est réfléchi quel que soit son incidence dans la direction du flux lumineux entrant : le rayon réfléchi est parallèle au rayon incident. Ainsi l'ensemble du flux lumineux provenant de l'avion suiveur 4 est réfléchi vers lui et non disséminé dans tout l'espace de réflexion. De ce fait, l'énergie lumineuse reçue est suffisante pour être captée par la ou les caméras 8 de l'avion suiveur 4.

Le dispositif 12 rétro-réfléchissant est positionné sur des zones déterminées de l'avion 2 meneur. Le dispositif rétro-réfléchissant éclairé permet à la caméra 8 d'acquérir une image des zones marquées par le dispositif malgré la luminosité réduite. Selon une forme de réalisation illustrée sur la figure 6, le catadioptre 12 se présente sous forme oblongue, et par exemple sous forme d'au moins une bande 14. Le terme bande dans la suite de la description est compris dans le sens de bande à système optique catadioptrique. Le catadioptre 12 pourrait ne pas se présenter sous forme oblongue et dans ce cas plusieurs catadioptres pourraient être disposés juxtaposés de manière à former un agencement oblong qui de loin apparaît sous la forme d'une ligne comme la bande 14. Le fait d'utiliser une bande 14 facilite la pose ou le retrait du dispositif rétro-réfléchissant 12 sur l'avion meneur. Le catadioptre 12 peut être collé sur la surface de l'avion meneur 2 par exemple en utilisant un catadioptre sous forme de bande adhésive. Le catadioptre 12 peut être fixé sur l'avion meneur par tout autre type de moyen connu et de préférence un moyen amovible pour être retiré de l'avion sans l'endommager. La forme oblongue est choisie pour permettre une extraction plus facile d'une image de l'avion meneur permettant de déterminer la position et l'angle mentionnés plus haut. En choisissant un positionnement des catadioptres 12 oblongs et ici des bandes 14 selon deux directions orthogonales sur l'avion meneur, il est possible d'extraire les données de positionnement souhaitées.

En effet, l'acquisition de l'image de l'avion meneur dépend de la forme et de l'emplacement du dispositif 12 rétro-réfléchissant sur l'avion meneur. Dans la forme illustrée sur la figure 6, le dispositif 12 rétro-réfléchissant se présente sous la forme d'une pluralité de bandes 14, placées sur la surface extérieure de l'avion meneur de manière à permettre de déterminer les données de positionnement mentionnées plus haut. Pour ce faire, les bandes 14 sont disposées sur des lignes selon l'axe Y et Z du repère cartésien de l'avion meneur 2. Ainsi par exemple, les bandes 14 sont fixées selon l'axe Y au niveau de l'aile et/ou de l'empennage horizontal et selon l'axe Z au niveau de l'empennage vertical et plus précisément par exemple au niveau de gouvernes (comprenant ailerons, volets) de l'aile et empennage horizontal et vertical. Mais tout autre positionnement est possible. Selon une forme de réalisation possible, au moins une partie des bandes 14 sont apposées sur des arêtes horizontales et verticales de l'avion. Sur la figure 6, une bande 14 est accolée au niveau du bord 28 de fuite de chacune des deux ailes de l'avion meneur et plus précisément ici depuis l'extrémité de chacune de celle-ci jusqu'à un point permettant de couvrir au moins 50% de sa longueur, la longueur étant la dimension prise dans la direction Y. Une bande 14 est positionnée également au niveau du bord 30 de fuite des deux empennages horizontaux sur approximativement la totalité de leur longueur. Enfin une bande 14 est placée sur approximativement la totalité de la longueur du bord 32 de fuite de l'empennage vertical. Un catadioptre 12 supplémentaire se présente non plus sous une forme oblongue destinée à suivre la forme des arêtes de l'avion mais d'une surface permettant de déterminer un point central à l'ensemble des catadioptres installés. Sur la figure 6, un catadioptre 18 de forme circulaire est placé à l'extrémité dans la direction X de la queue de l'avion meneur.

L'avion 4 suiveur est quant à lui muni d'un dispositif 10 d'éclairage. Il peut être de tout type et dans la forme de réalisation illustrée, le dispositif d'éclairage utilise un de ceux déjà en place sur avion. Dans la forme illustrée sur la figure 5, le dispositif 10 est l'ensemble des phares 20 d'atterrissage de l'avion. Plus l'émission lumineuse du dispositif d'éclairage de l'avion suiveur est importante et focalisée sur le dispositif 12 rétro-réfléchissant, plus l'intensité lumineuse reçue par le capteur de la caméra 8 sera importante et l'acquisition des lignes formées par les bandes 14 facilitée. De plus, les lignes formées par les bandes 14 sont spécifiques et facilement détectables par des méthodes classiques de traitement d'image telle que la détection de contour à l'aide d'un filtre de Canny.

Selon une forme de réalisation, la caméra 8 et/ou le dispositif 10 d'éclairage lorsqu'il s'agit par exemple des phares 20 d'atterrissage peuvent être contrôlés manuellement à partir de commandes accessibles au niveau du cockpit 16. Selon une autre forme de réalisation, le système 6 d'acquisition comprend une unité de commande centralisée pour permettre le contrôle à partir d'une interface de la caméra 8 et/ou du dispositif 10 d'éclairage. L'unité de commande disposant d'une interface avec le pilote permet de contrôler le capteur de la ou des caméras 8, la façon d'acquérir des images comme par exemple la synchronisation avec une source externe, l'optique de la caméra comme le contraste de l'image, le niveau de zoom ... et tout simplement également la mise en marche et l'arrêt de la dite caméra. De la même façon, l'unité de commande permet à partir de l'interface de mettre en marche et arrêter le dispositif 10 d'éclairage, d'en régler la luminosité, l'orientation et/ou toute autre fonction disponible.

Comme représenté sur la figure 4, le système 6 d'acquisition est connecté à un dispositif de traitement non représenté du flux vidéo provenant de la caméra. Le dispositif de traitement comporte une unité de réception des images transmises en temps réel par la caméra. Selon l'invention, « en temps réel » signifie que le temps de latence pour le traitement d'une image est inférieur à un temps limite qui permet la bonne performance des lois de l'automatique, implémentées de manière informatique, qui asservissent la position de l'aéronef. Sur la figure 4, la caméra 8 est connectée à la dite unité de réception du dispositif de traitement par un connecteur 26. Ladite unité de réception comporte une mémoire, par exemple une mémoire cache, pour enregistrer temporairement lesdites images et les mettre à disposition d'une unité de traitement de l'image.

Lors du traitement de l'image obtenue par cette unité, il n'est plus nécessaire d'extraire le contour de l'avion. Il est fait appel à une base de données stockée dans une mémoire du système dans laquelle sont stockées non pas les modèles en trois dimensions complets du pourtour extérieur de l'avion meneur mais la disposition des zones marquées par les bandes 14 qui en étant différente suivant l'avion concerné le caractérise. Selon une forme de réalisation, la base de données contient la disposition des zones marquées pour tous les types d'avions susceptibles d'être suivis par l'avion suiveur. Extraire le contour de l'avion et utiliser le modèle de l'avion complet reste envisageable mais rend le procédé de détermination de positionnement plus compliqué. Les dispositif et procédé de traitement proprement dit comme vu plus haut ne sont pas l'objet de la présente innovation et ne sont donc pas décrit plus en détail.

## Revendications

1. Aéronefs en vol en formation comprenant un aéronef (2) meneur et un aéronef (4) suiveur volant derrière l'aéronef meneur, munis d'un système d'acquisition d'une image de l'aéronef meneur (2) par l'aéronef suiveur (4) comprenant au moins une caméra (8) installée sur ou dans l'aéronef suiveur (4), un dispositif (10) d'éclairage prévu sur l'aéronef suiveur (4) et orienté au moins partiellement vers l'aéronef meneur (2) et un dispositif (12) rétro-réfléchissant de type catadioptre disposé sur l'aéronef meneur (2), le dispositif rétro-réfléchissant permettant à la caméra d'acquérir l'image des zones marquées par ledit dispositif, **caractérisé en ce que** le dispositif (12) rétro-réfléchissant comprend au moins un ou plusieurs catadioptres sous une forme oblongue ou juxtaposés de manière à former un agencement oblong qui de loin apparaît sous la forme d'une ligne, le dispositif (12) rétro-réfléchissant se présentant sous la forme de bandes (14) disposées sur la surface extérieure de l'aéronef meneur, les bandes (14) étant disposées sur des lignes selon l'axe Y et Z du repère cartésien de l'avion meneur (2), à savoir selon l'axe Y au niveau de l'aile et/ou de l'empennage horizontal et selon l'axe Z au niveau de l'empennage vertical.

2. Aéronefs selon la revendication 1, **caractérisé en ce que** des bandes (14) sont apposées sur des arêtes du fuselage de l'avion meneur.

3. Aéronefs selon l'une des revendications 1 ou 2, **caractérisé en ce que** au moins l'une des bandes (14) est positionnée sur une partie ou la totalité du bord de fuite (28) de la voilure.

4. Aéronefs selon l'une des revendications 1 à 3, caractérisé en ce au moins l'une des bandes (14) est positionnée sur une partie ou la totalité du bord de fuite (30) de l'empennage horizontal.

5. Aéronefs selon l'une des revendications 1 à 4, **caractérisé en ce que** au moins l'une des bandes (14) est positionnée sur une partie ou la totalité du bord de fuite de l'empennage vertical.

6. Aéronefs selon l'une des revendications 1 à 5, **caractérisé en ce que** au moins l'une des bandes (14) est positionnée au niveau d'une gouverne.

7. Aéronefs selon l'une des revendications 1 à 6, **caractérisé en ce que** le dispositif (12) rétro-réfléchissant comprend un catadioptre au niveau de l'extrémité de la queue de l'aéronef meneur.

8. Aéronefs selon l'une des revendications 1 à 7, **caractérisé en ce que** le dispositif (10) d'éclairage comprend des phares (20) d'atterrissage de l'aéronef suiveur.

## Patentansprüche

1. Flugzeuge im Formationsflug, umfassend ein führendes Flugzeug (2) und ein nachfolgendes Flugzeug (4), das hinter dem führenden Flugzeug fliegt, die mit einem System zur Erfassung eines Bildes des führenden Flugzeugs (2) durch das nachfolgende Flugzeug (4) ausgestattet sind, umfassend mindestens eine Kamera (8), die an oder in dem nachfolgenden Flugzeug (4) installiert ist, eine Beleuchtungsvorrichtung (10), die an dem nachfolgenden Flugzeug (4) vorgesehen ist und mindestens teilweise zu dem führenden Flugzeug (2) hin ausgerichtet ist, und eine zurückreflektierende Vorrichtung (12) vom Typ Rückstrahler, die an dem führenden Flugzeug (2) angeordnet ist, wobei die zurückreflektierende Vorrichtung es der Kamera ermöglicht, das Bild der durch die Vorrichtung markierten Bereiche zu erfassen, **dadurch gekennzeichnet, dass** die zurückreflektierende Vorrichtung (12) mindestens einen oder mehrere Rückstrahler umfasst, die eine längliche Form haben oder so nebeneinander liegen, dass sie eine längliche Anordnung bilden, die von Weitem in Form einer Linie erscheint, wobei die zurückreflektierende Vorrichtung (12) in Form von Streifen (14) vorliegt, die an der Außenoberfläche des führenden Flugzeugs angeordnet sind, wobei die Streifen (14) auf Linien entlang der Y- und Z-Achse des kartesischen Koordinatensystems des führenden Flugzeugs (2) angeordnet sind, das heißt, entlang der Y-Achse am Flügel und/oder am Höhenleitwerk und entlang der Z-Achse am Seitenleitwerk.

2. Flugzeuge nach Anspruch 1, **dadurch gekennzeichnet, dass** Streifen (14) an Kanten des Rumpfes des führenden Flugzeugs angebracht sind.

3. Flugzeuge nach einem der Ansprüche 1 oder 2, **dadurch gekennzeichnet, dass** mindestens einer der Streifen (14) an einem Teil oder der gesamten Hinterkante (28) der Tragfläche positioniert ist.

4. Flugzeuge nach einem der Ansprüche 1 bis 3, **dadurch gekennzeichnet, dass** mindestens einer der Streifen (14) an einem Teil oder der gesamten Hinterkante (30) des Höhenleitwerks positioniert ist.

5. Flugzeuge nach einem der Ansprüche 1 bis 4, **dadurch gekennzeichnet, dass** mindestens einer der Streifen (14) an einem Teil oder der gesamten Hinterkante des Seitenleitwerks positioniert ist.

6. Flugzeuge nach einem der Ansprüche 1 bis 5, **dadurch gekennzeichnet, dass** mindestens einer der Streifen (14) an einem Ruder positioniert ist.

7. Flugzeuge nach einem der Ansprüche 1 bis 6, **dadurch gekennzeichnet, dass** die zurückreflektierende Vorrichtung (12) einen Rückstrahler am Ende des Hecks des führenden Flugzeugs umfasst.

8. Flugzeuge nach einem der Ansprüche 1 bis 7, **dadurch gekennzeichnet, dass** die Beleuchtungsvorrichtung (10) Landescheinwerfer (20) des nachfolgenden Flugzeugs umfasst.

## Claims

1. Aircraft in formation flight comprising a lead aircraft (2) and a follower aircraft (4) flying behind the lead aircraft, provided with a system for the acquisition of an image of the lead aircraft (2) by the follower aircraft (4) comprising at least one camera (8) installed on or in the follower aircraft (4), a lighting device (10) provided on the follower aircraft (4) and oriented at least partially towards the lead aircraft (2) and a retroreflective device (12) of retroreflector type disposed on the lead aircraft (2), the retroreflective device allowing the camera to acquire the image of the zones marked by said device, **characterized in that** the retroreflective device (12) comprises at least one or more retroreflectors in an oblong form or juxtaposed so as to form an oblong arrangement which, from a distance, appears in the form of a line, the retroreflective device (12) taking the form of strips (14) disposed on the outer surface of the lead aircraft, the strips (14) being disposed on lines on the axes Y and Z of the cartesian reference frame of the lead aeroplane (2), namely on the axis Y on the wing and/or horizontal tail unit and, on the axis Z, on the vertical tail unit.

2. Aircraft according to Claim 1, **characterized in that** strips (14) are affixed onto ridges of the fuselage of the lead aeroplane.

3. Aircraft according to either of Claims 1 and 2, **characterized in that** at least one of the strips (14) is positioned on a part or all of the trailing edge (28) of the aerofoil.

4. Aircraft according to one of Claims 1 to 3, **characterized in that** at least one of the strips (14) is positioned on a part or all of the trailing edge (30) of the horizontal tail unit.

5. Aircraft according to one of Claims 1 to 4, **characterized in that** at least one of the strips (14) is positioned on a part or all of the trailing edge of the vertical tail unit.

6. Aircraft according to one of Claims 1 to 5, **characterized in that** at least one of the strips (14) is positioned on a control surface.

7. Aircraft according to one of Claims 1 to 6, **characterized in that** the retroreflective device (12) comprises a retroreflector at the end of the tail unit of the lead aircraft.

8. Aircraft according to one of Claims 1 to 7, **characterized in that** the lighting device (10) comprises landing lights (20) of the follower aircraft.
